# EUROPEAN PATENT APPLICATION

(11) **EP 2 768 180 A1**
(43) Date of publication of application: **20.08.2014**
(21) Application number: 13382045.6
(22) Date of filing: 14.02.2013
(51) Int. Cl.: H04L 12/24, H04L 12/28, H04L 29/06

(54) **Method and system for fixed broadband access zero touch, self-provisioning, auto-configuration and auto-activation**

(71) Applicant: Telefonica S.A., 28013 Madrid (ES)
(72) Inventor: Yagüe Valentín, Pablo A., 28001 Madrid (ES); Sánchez Yangüela, Manuel, 28013 Madrid (ES); Arroyo Yagüe, Marta, 28013 Madrid (ES)
(74) Representative: Gonzalez-Alberto Rodriguez, Natalia

(57) **Abstract**

Method and system for fixed broadband access zero touch self-provisioning, auto-configuration and auto-activation.

The method by accessing an access node through a Broadband Remote Access Server or Broadband Network Gateway that implements an IP access system and receiving, said access equipment, through said Broadband Remote Access Server or Broadband Network Gateway from a first entity, end-user's Authentication, Authorization and Accounting (AAA) credential information to access fixed broadband services, further downloads into an Access Node service profiles by using a second entity, said services profiles being stored in a service profile database, so that information regarding end-user's fixed broadband physical access service configuration and provision additional to the said first entity is included allowing an automatic and real time provisioning, configuration and activation of said access node to said fixed broadband services.

The system of the invention implements the method of the invention.

## Description

### Field of the art

The present invention generally relates to a method and a system for fixed broadband access zero touch self-provisioning, auto-configuration and auto-activation, and more particularly to a method and system establishing a new way to zero-touch provision, configure and activate the fixed access based on xDSL and GPON, X-GPON or WDM-PON systems in real time.

### Prior State of the Art

The proposed invention is focused in the Fixed Broadband Access. The object is to provide a new zero touch method and system to simplify the mechanisms of provisioning, configuration and activation of the user connections in this segment of the network. The current systems dedicated to this function are not automatic ones; the processes have to be launched manually or off-line, but not on-line in a real-time way. This implies a big delay since one user asks for a new service and the service is ready to be used and the difficulty of configuring equipment that manage a different layer of the network that may lead to an interruption of the service during the update of the configuration of the service. To save the information of configuration and provisioning, external repositories are used in the present, that must be substituted by databases with new interfaces situated in the same level than the system that access the data. It will be described additionally a new way, with new flows and additional parameters, of interacting among the existing elements and the new logical interfaces of the functional entities that are not yet defined.

The two fundamental elements in the access are the Access Nodes (10) (DSLAM (Digital Subscriber Loop Access Multiplexer) or OLT (Optical Line Termination)), and, on the other hand, the BRAS (20) (Broadband Remote Access Server).

When a user establishes a session from the customer-provided equipment (CPE) with the BRAS, one of the possibilities is that this element (20) establishes a connection by means of RADIUS or Diameter protocol with the RADIUS or Diameter server (30) to receive the credentials (AAA) of Authentication, receive Authorization to access to certain services and do the Accounting of the information of the session. The information of the capabilities offered to the user is available. There exists a database with the subscriber credentials of every line.

Fixed Broadband (FBB) services provided using either xDSL technologies or PON technologies are organized in a two level from a provisioning and configuration point of view. FBB customers can sign up a broadband subscription among a set of different services defined by the service provider. Each service modality is defined by a set of features like downstream and upstream access speed, downstream and upstream delays, downstream and upstream noise protection, assigned Virtual Local Area Networks (VLANs) downstream and upstream data volumes that can be exchanged through the fixed broadband access, permissions to access to a certain set of services, and the fee. So a customer's broadband subscription consists of two profiles: the first one is the service profile (195), which points to the set of physical layer (layer 1) and link layer (layer 2) features (downstream and upstream access bitrates, delays, noise protection mechanisms) which define the service modality offered by the service provider and signed up by the customer, and a second profile, the upper layer customer's profile (196), which includes his/her credentials (296) and the layer 3 (IP layer) and above features (IP address assignment mechanism, downstream and upstream IP committed data rate, downstream and upstream data volumes that can be exchanged through the fixed broadband access, and the permissions to access to a certain set of services). Service profiles (195) are stored in the Operations and Support Systems (OSS) (95) and used by Fixed Broadband Access Aggregator Element Management System (EMS) (97) to configure each customer's fixed broadband access at the access aggregator (10). Customer's profiles (196) are stored in OSS (96) and used by the IP edge Element Management System (98) to configure each customer's access in the BRAS (20) while his/her credentials (296) and some other parameters included in his/her customer profile (196) are stored at the AAA database 50..

In addition to them in the case of xDSL lines there is a database with historical information of the physical parameters that characterize the lines. This information is saved to obtain information of the stability and capacity of the lines. If the operator considers a commercial service upgrade or a maximum bitrate service (adequate to the possibilities of the lines), they are monitored and changed following a DLM (Digital Line Management) strategy.

As a consequence of all the processes before mentioned, the provisioning, configuration, activation and upgrade of the service for a user or a group of users in the current systems is complex and slow. There are layers of separate systems and parallel systems for any of the equipment, and any of the functions. For example the provisioning, configuration and activation for both the access node and the BRAS are in a separate way despite both contribute to the same segment of the network.

For example in a normal provisioning and configuration system when an upgrade of the bitrates of both downstream and upstream is asked for, if the access node changes first, the BRAS will have a limitation of the bitrate, that will affect the upstream, a higher traffic will arrive to the BRAS and some packets may be discarded. In the case the BRAS changes first, the access node will have a limitation of the bitrate that will affect the downstream, cause higher amount of traffic than that which will be able to pass through the access node may arrive and some packets downstream may be discarded. The current solution consists of waiting till both processes have finished doing some verification manually.

In case the operator decides to do an upgrade or a change of the service of a line consisting of the provision of a new profile in the equipment, the introduction of the new profile has to be done first manually, and, after this operation, the assignment to the corresponding lines and its activation is also done manually. When a new profile has to be applied to a big number of lines, this operation is very expensive, tedious and slow as it consists of a process in which the change is applied line by line.

The provision and activation of the line profiles is something complicated as it has to be applied line by line.

The application of smart reprofilling looking for the highest stable available bitrate following DLM schemes should not only consider the access node as it is being done currently but also the BRAS.

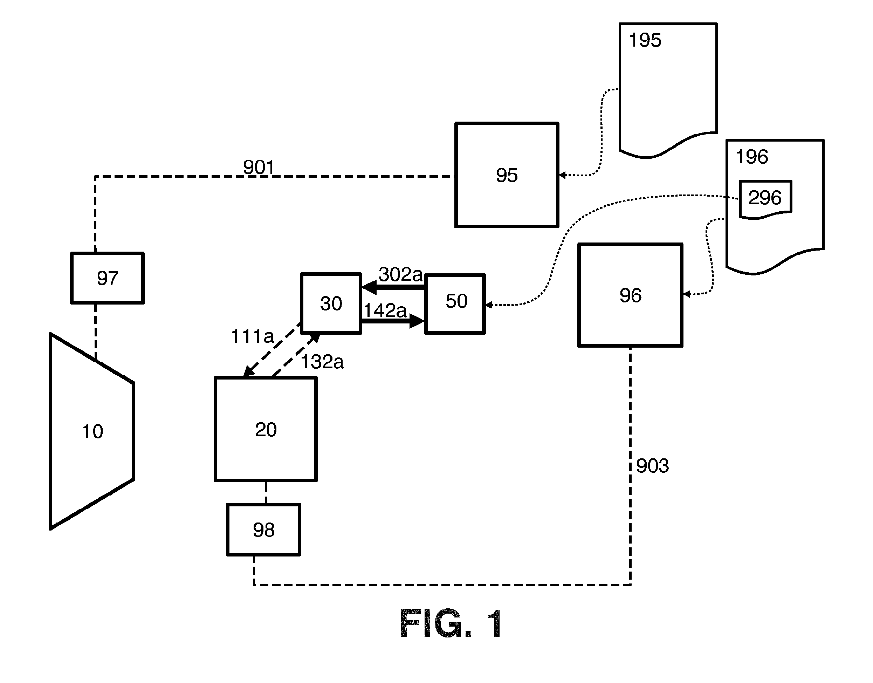

A user cannot change the service profile of his line dynamically. The figure 1 shows the actual process of provision an activation of a line. The network elements involved are:
- 10 xDSL or Optical Access Aggregator e.g. (DSLAM, OLT)
- 20 Fixed IP Edge e.g. (BRAS or BNG)
- 95 OSS for the FBB line End-user Provision & Control
- 96 OSS for the FBB Service provision
- 97 OSS that manages the Fixed Broadband Access Aggregators
- 98 OSS that manages the Fixed IP Edges

And the communications flows between elements are:
- 901 Communication from the OSS regarding service profiles used by xDSL or Optical Access Aggregator, and end-user physical access provision.
- 902 Communication from the OSS regarding FBB service provision at the Fixed IP Edge.

Figure 1 also shows other network elements which are not involved in Fixed Broadband Access provision. They are only involved into the IP access provision (AAA or Authentication, Authorization and Accounting of IP sessions, IP address assignment). But they do not take part neither in the physical Fixed Broadband Access provision at the Access Aggregator (10) nor in the IP Edge (20) provision. These elements are:
- 30 AAA Server, typically a RADIUS server.
- 50 User profile database, which contains end-user profiles. These profiles only involve layer 3 (i.e. IP level) and above parameters (like IP address assignment mechanism, IP filters, routes, DS bits marking) but they do not include any physical layer (layer 1) or layer 2 parameters (i.e. do not include both downstream and upstream access bit rates limits, impulse noise protection limits, maximum delay limits, noise margin limits, VLAN assignment, T-CONT assignment,...)

And the data flows in which AAA server 30 and User profile database 50 are involved are the following:
- 132a: requests from the BRAS 20 to the AAA server 30 in order to allow IP traffic from end user enters into the network.
- 111a: answers from the AAA server 30 to the BRAS 20 authorizing or denying the access. These answers do not include any information that can be used for end user port configuration at the Fixed Broadband Access Aggregator 10.
- 302a: end user profile sent by the User Profile database 50 to the AAA server 30. This user profile today does not include any layer 1 (i.e. physical layer) or layer 2 information and is done manually and not by other engines like DLM engine (70) or Service planning (80).
- 142a: accounting information (starting time, session duration, number of input and output IP packets, number of input and output bytes) sent by the AAA server 30 to the User Profile database 50.

### Description of the Invention

The main objective of the present invention is to establish a method and a system with a new way to provision, configure and activate the fixed access based on xDSL, GPON, X-GPON and WDM-PON systems in real time. This operation will permit a zero touch one without the complexity and slowness derived from the use of traditional OSS.

The invention will also take advantage of the control information that is already being used in the Broadband Remote Access Server (BRAS) or Broadband Network Gateway (BNG) in IP level, and the user sessions, being this control of the connections centralized in a few nodes of the network, the IP edges (i.e. the Broadband Remote Access Server or Broadband Network Gateway).

In order to achieve those objectives, the invention, in a first aspect, as commonly used in the field provides a method for fixed broadband zero touch access self-provisioning, auto-configuration and auto-activation, comprising:
- accessing an Access Node through a Broadband Remote Access Server or Broadband Network Gateway that implements an IP access system, also known as IP Edge to fixed; and
- receiving, said Access Node, through said Broadband Remote Access Server or Broadband Network Gateway from a first entity or AAA server performing functions of a service configuration and IP user session control, end-user's Authentication, Authorization and Accounting (AAA) credential information to access fixed broadband services.

Contrary to the known proposals, the method of the first aspect further downloads into the Access Node service profiles by using a second entity or service configuration server, said services profiles, i.e. physical and upper layers services profiles, being stored in a service profile database, each one containing a plurality of parameters of a service modality defined by a service provider and thus service definition and its evolution is decoupled from end-user's profiles, so that information regarding end-user's fixed broadband physical access service configuration and provision additional to the information of said first entity or IP user session control AAA server is included allowing an automatic and in real provisioning, configuration and activation of said Access Node to said fixed broadband services.

In an embodiment, said service profiles can be downloaded directly, without any intermediate equipment, into said Access Node or indirectly through an intermediate element as for instance said Broadband Remote Access Server or Broadband Network Gateway. In the case the downloading is made through the Broadband Remote Access Server or Broadband network Gateway, a signalling protocol will be used between the Access Node and this intermediate element.

The Broadband Remote Access Server or Broadband Network Gateway further exchanges with the Access Node quality information regarding the state of a plurality of xDSL or xPON lines through said second entity or service configuration server, so the information of the quality of the lines will also be available to the Access Node. On one hand the access node receives information of the parameters of the lines in order that those lines can be optimized and on a second hand a change of configuration in certain lines can be done so that a certain quality of service can be chosen in that line.

In yet another embodiment, the first entity or IP user session control AAA server controls the configuration of every user accessing said fixed broadband service. This entity can be the same entity as the one used for the control of the PPPoE sessions of the Fixed Broadband users including new interfaces or flows.

The method of the first aspect will allow a quick and automatic way to change the bitrate of one user's line through the communication of the Access Node and the Broadband Remote Access Server or Broadband Network Gateway. The user also will be able to change the desired bitrate through a web page, always considering the limits that the concrete line and the technology allow for this.

A second aspect of the invention provides a system for fixed broadband zero touch access self-provisioning, auto-configuration and auto-activation, comprising:
- an Access Node adapted to access fixed broadband services through a Broadband Remote Access Server or Broadband Network Gateway that implements an IP access system;
- said Broadband Remote Access Server or Broadband Network Gateway receiving from a first entity or AAA server end-user's Authentication, Authorization and Accounting (AAA) credentials information to access to said fixed broadband services that include new proposed parameters; and
- said first entity or AAA server adapted to perform functions of end user profile configuration pointing to the service profiles downloaded into the access nodes by the second entity and IP user session control and including an associated user profiles database.

In a characteristic manner, in the system of the second aspect of the present invention said first entity or AAA server is complemented by a second entity or service configuration server regarding end-user's fixed broadband physical access service configuration and provision additional to said first entity or AAA server. The second entity or service configuration server is adapted to download into any Access Node service profiles that are stored in a service profile database.

So that, the system of the second aspect also includes a service profile database to store said service profiles, each one of said service profiles containing a plurality of parameters of a service modality defined by a service provider.

A Web-based customer interface which permits end-users to sign up or modify a fixed broadband service subscription and trigger the corresponding provisioning process in real-time is also included in the system. To do so, the Web-based interface includes: an interface with said first entity or AAA server to force access re-negotiation in accordance to new service profile requested by the user, over the already existing interface between said AAA server and the Broadband Remote Access Server or Broadband Network Gateway and a second interface with said user profiles database, which are the service profiles among the set of available and feasible ones that can be signed up by the user and the selection made by the user.

Moreover, embodiments of the system further include the introduction of several more new interfaces or flows allowing the interaction between the elements and functional entities of the system.

For instance, an interface between the second entity or service configuration server and the Access Node which permits the download by said Access Node of the service profiles stored in the service profiles database. This interface, as explained before, can be implemented directly, without any intermediate equipment or indirectly through an intermediate element.

Another of said interfaces is the one provided between a service planning system and said second entity or service configuration server in order to allow said service provider to trigger real time changes or modifications, that may be massive ones, of said service profiles in said Access Node or in said Broadband Remote Access Server or Broadband Network Gateway.

Moreover, the system further includes an interface arranged to allow said service provider to download said service profiles from said service planning system into said service profile database; and an interface arranged to allow said service provider to download a concrete set of service profiles that each user can contract into said user profiles database.

Finally, a plurality of interfaces between a Dynamic Line Management Engine and said first entity or AAA server arranged to allow to said Dynamic Line Management Engine to request information about the status of each physical line and a plurality of interfaces between said Dynamic Line Management Engine and said user profiles database arranged to allow said Dynamic Line Management Engine to collect requested data from said user profiles database are further included indicating feasible service profiles characteristics that permit a certain quality of service for each user.

The system of the second aspect of the invention implements the method of the first aspect of the invention and interacts over different elements.

In the claims referring to the present invention, the term Access Node, or alternatively fixed broadband access aggregator as is used sometimes in the proposal description, can refer to a Digital Subscriber Loop Access Multiplexer (DSLAM) or to an Optical Line Termination (OLT).

In the present invention description, by means of auto configuration it has to be understood the configuration of the access nodes according to the credentials received from the data base information received through the Broadband Remote Access Server or Broadband Network Gateway. By self-provisioning, the provision in the access nodes of the service profiles received from the databases through the Broadband Remote Access Server or Broadband Network Gateway. And by auto activation, the activation of the user profiles in the access nodes of the service profiles received from the databases through the Broadband Remote Access Server or Broadband Network Gateway.

### Brief Description of the Drawings

The previous and other advantages and features will be more fully understood from the following detailed description of embodiments, with reference to the attached drawings, which must be considered in an illustrative and non-limiting manner, in which:
Figure 1 is a representation of the actual process of provision and activation of a line showing its principal elements and the main communications flows between the elements.
Figure 2, is a representation of Scenario 1 according to an embodiment, where End-user session control and service policies update is centralized through the IP edge.
Figure 3 is a representation of Scenario 2 according to an embodiment, where End-user session control is centralized through the IP edge while fixed broadband service profiles update bypasses IP Edge.

### Detailed Description of Several Embodiments

Embodiments of the present invention are made in order to provide a method and a system for real-time zero touch auto configuration, self-provisioning, and auto activation of the Broadband fixed access services in the access aggregators and the self-provisioning of the services to the final users. With an automatic provision that allows the separation of the management entities of the line profiles into two entities: the configuration of the service and the service provision of the user. To get this, new databases (60) and new flows among them and the existing data bases (50) have been stated.

In relation to these flows with the AAA, two independent instances of AAA (Authentication, Authorization and Accounting) have been stated:
- One of them for the control of the configuration of every user represented by the AAA server that controls the session of the user (30) thus providing end user provision and session control with his corresponding database (50) with the service profiles of every client and the logs of any session. This AAA server (30) and Data Base (50) could be the same currently being used for the control of the sessions PPPoE of the Fixed Broadband users with some added parameters and additional flows.
- A new server (40) is in charge of the physical service profiles configuration control (40), with his corresponding database (60) with the service profiles considered by the commercial offer of the Telco Operator.

That's to say, being separated entities or servers, the configuration, provision and activation is divided into the service contracted by the user, and on the other hand into the commercial catalogue offered by the operator. And they can be connected to other entities that allow their automation.

The proposal is not only to be applied to the line access aggregators' xDSL or DSLAMs (10). It can be applied to any Broadband Fixed Access Aggregator as for example Access Aggregators of Optical Fiber (OLTs) based on technologies like GPON, X-GPON or WDM-PON. In these last cases the available bitrate in any access is much higher than the one that the xDSL technology can offer. The solution considered in the current invention has the objective of providing a zero-touch and real time self-provisioning of these sorts of services as well as the auto configuration, self-provisioning and auto activation of the access aggregators with the new services profiles linked to the commercial offer that the operator is willing to implement. This is something that is not possible with the current systems that do the provisioning in a recorded way, with the corresponding extra cost in the operations of a telecommunications operator.

The current proposal of patent do not consider at all neither the engine of the dynamic management of the lines (DLM engine, 70) nor the system that implements the planning of the fixed broadband access service (80). It is assumed that those entities exist. As it has been indicated in the previous points, the current proposal states a new system that allows an auto-provision or the real-time contracting Fixed Broadband Access and a mechanisms that allows the modification of the profiles that takes part of the FBB service in real time, as well as migrations or massive upgrades of the complete Fixed Broadband access plant. The new flows of interaction between the systems (70) and (80) is included to allow that the proposed system may use, for the upgrade of the lines and the broadband connection profiles, those systems. In case that (70) and (80) would not exist, the proposal system would use as inputs of the definition of the FBB services the commercial department of the operator.

In order to better explain some embodiments of the invention, two scenarios are considered.

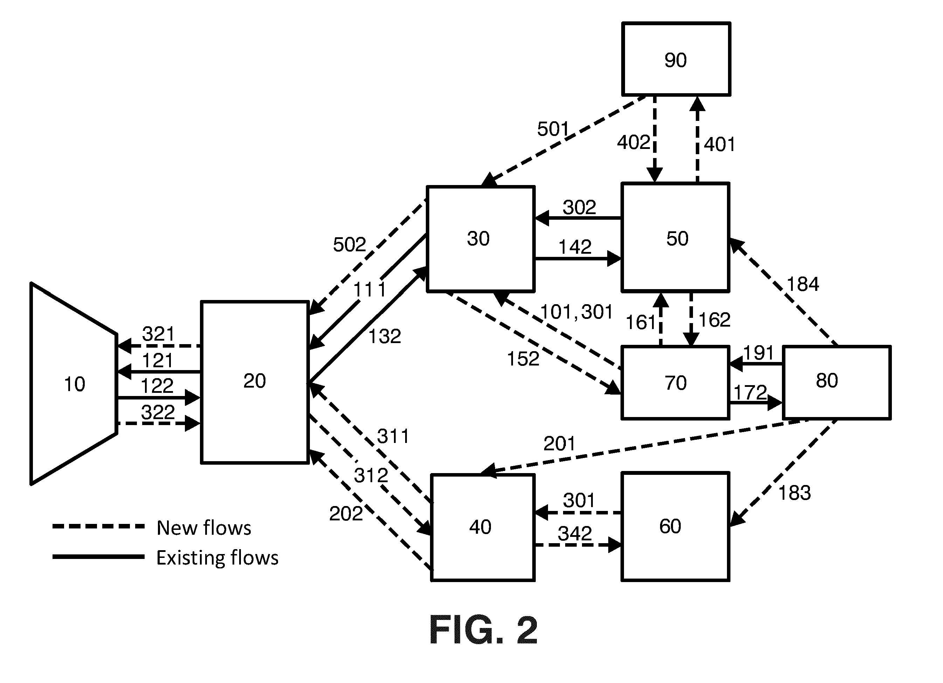

In the first scenario, as seen in Figure 2, the whole system acts through the IP edge (BRAS) or (BNG) (20). This includes the request of information about the state of the xDSL or xPON lines, the modification of the profiles of every xDSL or xPON line, and the modification of the profiles that may be applied to a line. This way the operator can take advantage of the fact that the user sessions are already controlled in the BRAS. So the information regarding the physical fixed broadband connections of the users could be centralized through only a few nodes, the IP Edges or BRAS (20) instead of a larger number of them, the Access Aggregators (10), hence reducing complexity. To do so, BRAS (20) requires a new client. While BRAS (20) AAA client is being used to receive end user profiles from AAA server (30), the new BRAS client will be used to receive fixed broadband access service profiles from server (40). Fixed broadband access services profiles will be forwarded by BRAS (20) to fixed broadband access aggregators (10). But it also implies that the signalling protocol used between the BRAS (20) and the access node (10) includes the needed parameters for the exchange of the information, paying special attention to the fact that most of them are not considered in the present. This signalling protocol could be for example the ANCP protocol (but some other protocols could be valid if they allow exchanging the required information).

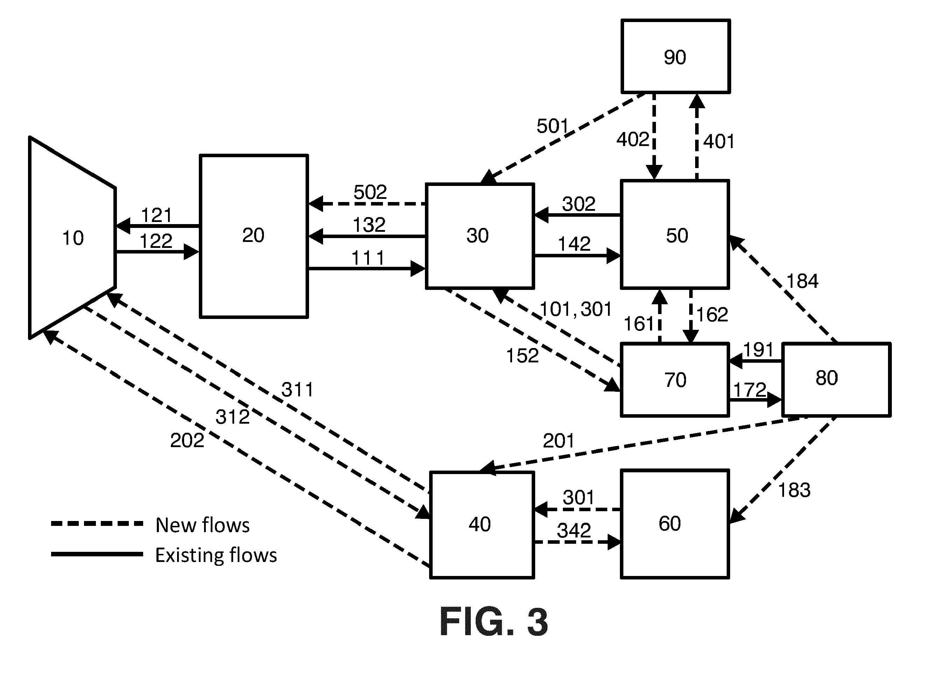

On the other hand, in the second scenario, Figure 3, the BRAS only manages the information requests about the state of the xDSL or xPON lines, as well as the requests to modify the concrete profile that is going to be applied to a certain xDSL or xPON line. The modifications of the available profiles to be applied to the xDSL or xPON lines of one DSLAM would be managed directly through the AAA server (40) and its set of available capabilities of control of the configuration, using a protocol like for example RADIUS or Diameter. This option can be more easily implementable using these already mentioned protocols, through the *Vendor Specific* attributes. To do so, fixed Broadband Access Aggregators (10) will have to include an AAA client instance in order to receive fixed access service profiles from AAA server (40) But, on the other hand, it states the inconvenience of having to open a new signalling path with a lot more connections, that does not exist yet (e.g. in the case of a network of 8 M Broadband Access lines about 300 BRAS and 20.000 DSLAMs), so in the first case there would be only 300 instances for the control of the xDSL or xPON lines of the users, that would profit the already signalling existing for the IP level control of the user sessions, while in the second scenario, about 20.000 signalling instances would be needed.

In both scenarios, the new client used to obtain fixed broadband access profiles, must be capable to implement Change of Authorization capabilities, like those provided by RADIUS CoA or equivalent. This function is necessary to permit massive service profile updates in all fixed broadband access aggregators (10).

The Network Architecture elements of Figures 2 and 3 are:
- 10 xDSL or Optical Access Aggregator e.g. (DSLAM, OLT)
- 20 Fixed IP Edge e.g. (BRAS or BNG)
- 30 End-user Provision & Session AAA server (End-user Provision & Session Control)
- 40 Configuration Control AAA server (Service Configuration Control)
- 50 User Profiles & Session Logs Database
- 60 Service Profiles Database
- 70 Dynamic Line Management (DLM) Engine
- 80 Service Planning
- 90 Web-based Customer Interface

Relationship among Network Architecture elements:
101: Request from the dynamic lines management engine (DLM engine, 70) of the information needed to analyse the capacity of a xDSL line (synchronization bitrate, Signal to Noise margin, maximum bitrate, maximum available bitrate...). To get this the request must include the precise identification of the line whose capacity is to be estimated.
   - For example, in the case of Broadband Fixed Access through xDSL technology (ADSL, ADSL2, ADSL2+ or VDSL2) :
      ○ The Aggregation Node or DSLAM.
      ○ Line card inside the DSLAM
      ○ Port of the Line Card.
   - In the case of using an OLT to provide Broadband fixed access with GPON, X-PON or WDM-PON technology, as it deals with Broadband connections over optical accesses with physical topology point to multipoint, the identification should include:
      ○ The aggregator or OLT
      ○ The line card inside the OLT
      ○ The optical port
      ○ The user per optical port
111: Request of information from the AAA server of User Session Provision and Control (30) to the BRAS (20) about the xDSL or xPON data connection (current bitrate in both upstream and downstream, maximum attainable bit rate in both upstream and downstream, minimum bitrate, delay, INP (only for xDSL) Signal to Noise Margin, etc.). This request on information is different from 111a request (figure 1), which is a conventional AAA access request which not includes the requests of previously mentioned data.
121: Forward of the information received 111 from the BRAS (20) to the DSLAM (10)
   - This forward can be done for example via ANCP protocol.
122: Request from the DSLAM (10) to the IP edge or BRAS (20) with the xDSL or xPON line requested data
   - This response can be made for example via ANCP protocol.
132: Forward from the BRAS (20) to the AAA server that is in charge of the Provision and User Sessions Control (30), of the information provided by the DSLAM (10).
502: trigger request sent by the AAA server (30) to the BRAS (20) asking for a change of credentials due to a change in the end-user's subscription signed up by the customer, working as radius CoA or equivalent.
142: Send the data received to the data base (50) with the log sessions, in order that afterwards that information can be accessed by the DLM engine (70). It includes layer 1 (physical layer) and layer 2 (link layer information) that was not included in 142a (see figure 1).
152: The AAA user sessions control informs to the DLM engine about the result of the request made by this.
161: Request to the user data base from the DLM engine of the data corresponding to the check of the line regarding its capacity.
162: Send from the data base the requested information
   - That information is processed by the DLM engine (70). The result is a sort of recommendations that are sent (172) to the logic involved in the planning of the service (80).

The DLM engine (70), with this information performs the following actions:
183: Dumps into the service database the new xDSL or xPON service profiles available for the subsequent commercial contract by the customers.

Each profile will be identified by means of a unique identifier, and will include data such as:
- Line synchronization or physical layer bitrate, for both directions downstream and upstream.
- Bitrate range inside which the synchronization bitrate can vary, in both directions upstream and downstream:
   - Maximum line synchronization bitrate in both downstream and upstream directions.
   - Minimum line synchronization bitrate in both downstream and upstream directions.
- In case of xDSL (ADSL, ADSL2+, VDSL2) access, noise margin, in both upstream and downstream directions.
- Maximum delay in both directions: upstream and downstream.
- In case of xDSL access, minimum Protection against Impulse Noise (INP), in both upstream and downstream directions.
- VLAN identifier
- Or others like T-CONT (Transport-Container) ID in case of GPON or X-GPON fixed broadband accesses.

184: Dumps the database with every user service profile that the user has contracted. For this it must be sent to the user profiles database (50) the identifiers or the names of all service profiles that can be supported by any xDSL or xPON user line according to the stability criteria defined by the operator.

191: Request to the DLM engine so that a request to re-profile the lines can be made. This request will trigger multiple requests 101, so many as lines whose bitrate has to be updated. To do this, the request shall include on the one hand the IDs of all the affected lines and, on the other hand the ID of the profile to apply to each line.

201: Request from the AAA server with the function of configuration control (201), from the service planning, for the updating of the connection profiles in the DSLAMs according to the new profiles whose parameters will be obtained by the AAA server (201) from the service profiles database. This request will be implemented in a later step from the configuration control AAA server (40) by means of requests like CoA (Change of Authentication) RADIUS or equivalent ones with other mechanisms. This flow is equivalent to 201 but for the case of service profiles configuration. The implementation will be done through the following sequence of messages:
- In scenario 1, in which all changes of the profile of the fixed broadband access are centralized through the BRAS (20):
   ○ 311: Request from the configuration control AAA server (40) to the BRAS (20) and acceptance by the latter.
   ○ 202: trigger request sent by service profile server (40) asking for a change of physical fixed broadband access profiles due to a change in those profiles defined by the Telco Operator, working as radius CoA or equivalent.

Data collection by the BRAS (20) through the AAA server (40) after consultation (301) of this to the service profiles database (60).
○ 321: Send the new profile from the IP edge BRAS (20) to the access aggregator node (10). This flow contains the same information than flow 311.
○ 322: Answer of the access aggregator (10) to the IP edge or BRAS (20) indicating the result of the upgrade. This flow contains the same information than flow 312.
○ 332: Forward the response from the IP edge (20) to the configuration control AAA server (40) with the result of the operation.
○ 342: Save the results of the update in the logs of the service profiles database.

In Scenario 2, in which all changes of the profile of the fixed broadband access are not centralized through the BRAS (20):
○ 311: Request of the configuration control AAA server (40) to the access aggregator node (10) and acceptance by the latter.

Data collection by the access aggregator node (10) through the AAA server (40) after consultation (301) of this to the service profiles database (60).
○ 312: Answer of the access aggregator node (10) to the control AAA server (40) indicating the result of the upgrade.
○ 342: Saving the result of the update in the logs of the service profiles database.

Once the DLM engine (70) has analysed the capacity of the lines (maximum bitrate, stability, etc.), and with the results obtained from this analysis (172) the service system planning (80).
- It defines the total marketable profiles for each line and it loads them (183) in the service data base (60).
- It informs to the client web interface (90) of the set of service profiles (184) that each user can contract.

Once the service planning system has made so, it can trigger an update of the configuration of the xDSL access profiles in all DSLAMs (10), and every client can contract in real time (501) a new service profile for its xDSL access.

301: Query from the AAA server configuration control (40) the configuration data to the service profiles database (60).

401: Query from the web interface of the client (90) to the user profile database (50) of the profiles that can be contracted by the customer.

402: Answer of the user profiles database (50) of the profiles that the line of the customer can support.

501: With the information received, the client, through the client web interface (90), requests to AAA server (30) to send to the access aggregator nodes (10) a request for the reconfiguration and re-synchronization of the line, according to the new connection parameters obtained (302) from the user database. The set of connection parameters 302 is different from end-user profile 302a (see figure 1) used today, which only contains IP layer and above parameters, but no physical connection parameters. This request will be implemented in a latter step from the configuration control AAA server (40) via requests like RADIUS CoA (Change of Authentication) or equivalent with other mechanisms.

Some of the main technical advantages achieved are: auto configuration, self-provisioning and auto activation of fixed broadband accesses in real time with zero-touch; bidirectional transmission of messages between the BRAS and the access node with information of the profiles to be applied to the lines globally; separation in separate entities one regarding the set of profiles of the service and a different one regarding the concrete profiles assigned to the lines; auto configuration of the profiles and it also allows passing the information of maximum capacity of the line with stability to the BRAS.

On the other hand, some of the main commercial advantages achieved are: massive upgrade of the services offered to the users; quick and easy provision in the plant of the new Broadband fixed access services to the user; new auto configuration service available for the users and flexible user service.

A person skilled in the art could introduce changes and modifications in the embodiments described without departing from the scope of the invention as it is defined in the attached claims.

### ACRONYMS

AAA: Authentication, Authorization and Accounting.
ADSL Asymmetric Digital Subscriber Line.
ANCP: Access Node Control Protocol.
BNG: Broadband Broadband Network Gateway.
BRAS: Broadband Remote Access Server.
CoA: Change of Authorization.
DB: Database.
DLM: Dynamic Line Management.
DSLAM: Digital Subscriber Line Access Multiplexer.
FBB: Fixed Broadband.
GPON: Gigabit capable Optical Line Termination.
INP: Impulse Noise Protection.
OLT: Optical Line Termination.
OSS: Operation Support Systems.
RADIUS: Remote Authentication Dial-In User Service.
T-CONT: Transport Container.
VDSL: Very-high bitrate Digital Subscriber Line.
VLAN: Virtual Local Area network.
VSA: Vendor Specific Attribute.
WDM-PON: Wavelength Division Multiplexing - Optical Line Termination.
X-GPON: 10 Gigabit capable Passive Optical Line Termination
xPON: every PON solution including GPON, xGPON or WDM-PON

## Claims

1. A method for fixed broadband access zero touch, self-provisioning, auto-configuration and auto-activation, comprising:
- accessing an Access Node (10) through a Broadband Remote Access Server or Broadband Network Gateway (20) that implements an IP access system, also known as IP Edge to fixed; and
- receiving, said Access Node (10), through said Broadband Remote Access Server or Broadband Network Gateway (20) from a first entity or AAA server (30) performing functions of a service configuration and IP user provision and session control, end-user's Authentication, Authorization and Accounting (AAA) credential information to access fixed broadband services,
the method being **characterized in that** further comprises downloading into the Access Node (10) service profiles by using a second entity or service configuration server (40), said services profiles being stored in a service profile database (60), each one containing a plurality of parameters of a service modality defined by a service provider and thus service definition and its evolution is decoupled from end-user's profiles, so that information regarding end-user's fixed broadband physical access service configuration and provision additional to the information of said first entity or IP user session control AAA server (30) is included allowing an automatic and in real provisioning, configuration and activation of said Access Node (10) to said fixed broadband services.

2. A method according to claim 1, comprising a direct downloading of said service profiles to said Access Node (10).

3. A method according to claim 1, comprising indirectly downloading said service profiles through said Broadband Remote Access Server or Broadband Network Gateway (20).

4. A method according to claim 3, comprising using a signalling protocol between said Broadband Remote Access Server or Broadband Network Gateway (20) and said Access Node (10), said signalling protocol including a plurality of parameters needed for the information exchanging.

5. A method according to previous claims, wherein said Broadband Remote Access Server or Broadband Network Gateway (20) further transmits to said Access Node (10) quality information regarding the state of a plurality of xDSL or xPON lines obtained through said second entity or service configuration server (40).

6. A method according to claim 2, comprising performing by said service provider changes or modifications over said downloaded service profiles in said Access Node (10).

7. A method according to claim 3, comprising performing by said service provider changes or modifications over said downloaded service profiles in said Broadband Remote Access Server or Broadband Network Gateway (20).

8. A system for fixed broadband access zero touch, self-provisioning, auto-configuration and auto-activation, comprising:
- an Access Node (10) adapted to access fixed broadband services through a Broadband Remote Access Server or Broadband Network Gateway (20) that implements an IP access system;
- said Broadband Remote Access Server or Broadband Network Gateway (20) receiving from a first entity or AAA server (30) end-user's Authentication, Authorization and Accounting (AAA) credentials information to access to said fixed broadband services; and
- said first entity or AAA server (30) adapted to perform functions of user profile configuration and IP user session control and including an associated user profiles database (50),
the system being **characterized in that** further comprises:
- a second entity or service configuration server (40) regarding end-user's fixed broadband physical access service configuration and provision additional to said first entity or IP user session control AAA server (30) being adapted to download service profiles that are stored in a service profile database (60) into an Access Node (10); and
- a service profile database (60) to store said service profiles, each one of said service profiles containing a plurality of parameters of a service modality defined by a service provider.

9. A system according to claim 8, including a plurality of interfaces (311 and 312) between said Access Node (10) and said second entity or service configuration server (40) or between said Broadband Remote Access Server or Broadband Network Gateway (20) and said second entity or service configuration server (40) arranged to allow said service profiles download.

10. A system according to claim 8, further comprising a Web-based user interface (90) adapted to permit end-user's signing up or modification of a fixed broadband service subscription and to trigger the corresponding provisioning process in real time acting over said first entity or AAA server (30).

11. A system according to claim 10, wherein said Web-based user interface includes an interface (501) with said first entity or AAA server (30) and two interfaces (401 and 402) with said user profiles database (50) arranged to interchange required information.

12. A system according to claim 9, further including an interface (201) arranged to allow said service provider to trigger real time changes or modifications of said service profiles in said Access Node (10) or in said Broadband Remote Access Server or Broadband Network Gateway (20).

13. A system according to claims 10 to 11, further including:
- an interface (183) arranged to allow said service provider to download said service profiles from a service planning system (80) into said service profile database (60); and
- an interface (184) arranged to allow said service provider to download a concrete set of service profiles that each user can contract into said user profiles database (50).

14. A system according to claim 8, further including:
- a plurality of interfaces (101, 301 and 152) between a Dynamic Line Management Engine (70) and said first entity or AAA server (30) arranged to allow to said Dynamic Line Management Engine (70) to request information about the status of each physical line; and
- a plurality of interfaces (161 and 162) between said Dynamic Line Management Engine (70) and said user profiles database (50) arranged to allow to said Dynamic Line Management Engine (70) to change a set of available feasible user profiles from said user profiles database (50) according to certain quality of service parameters downloaded from the Service Planning (80) from the Service Provider.
